# EUROPÄISCHE PATENTSCHRIFT

(11) **EP 1 868 822 B1**
(45) Veröffentlichungstag und Bekanntmachung des Hinweises auf die Patenterteilung: **23.07.2014**
(21) Anmeldenummer: 06724240.4
(22) Anmeldetag: 11.04.2006
(51) Int. Cl.: B42D 25/00, G03H 1/02, G03H 1/26

(54) **TRANSFERFOLIE**
TRANSFER FILM
FILM DE TRANSFERT

(30) Priorität: 13.04.2005 DE 102005017169
(43) Veröffentlichungstag der Anmeldung: 26.12.2007
(73) Patentinhaber: OVD Kinegram AG, 6301 Zug (CH)
(72) Erfinder: STAUB, René, CH-6332 Hagendorn (CH); HANSEN, Achim, CH-6300 Zug (CH); ATTNER, Juri, 90559 Burgthann (DE)
(74) Vertreter: Zinsinger, Norbert
(86) Internationale Anmeldenummer: PCT/EP2006/003318
(87) Internationale Veröffentlichungsnummer: WO 2006/108607

(56) Entgegenhaltungen:
- EP-A- 1 182 054
- EP-A2- 1 182 055
- WO-A-03/082598
- US-A- 5 411 296
- US-A1- 2003 058 491
- US-A1- 2004 008 390

## Beschreibung

Die Erfindung betrifft eine Transferfolie, insbesondere Heißprägefolie, die eine Trägerfolie und eine auf der Trägerfolie angeordnete und von der Trägerfolie ablösbare Übertragungslage mit einer transparenten Strukturschicht umfaßt, ein Verfahren zur Herstellung einer derartigen Transferfolie sowie einen Mehrschichtkörper.

Zum Schutz von Dokumenten, wie beispielsweise Ausweispapieren, Banknoten oder Kreditkarten, ist es bekannt, Heißprägefolien oder Laminierfolien mit abziehbarem Träger als Sicherheitselemente zu verwenden. Die Folien enthalten Schichten mit diffraktiven Merkmalen, kombiniert mit metallischen und/oder dielektrischen Reflexionsschichten. Nach der Applikation des Sicherheitselements auf ein Substrat liegt im wesentlichen eine glatte, spiegelnde Oberfläche vor. Solche Sicherheitselemente weisen optische Merkmale auf, die in das Sicherheitselement eingebettet sind.

Aus EP 1 182 054 A2 ist eine eingebettete Strukturschicht bekannt, die auf beiden Seiten mit Reliefstrukturen ausgebildet ist, die durch ihr Zusammenwirken optische Effekte ausbilden. Die Strukturschicht weist eine Schichtdicke bis 200 µm auf. Beidseitig der zu prägenden Folie sind zwei Prägezylinder angeordnet, die sich gegenseitig als Gegendruckzylinder dienen, um einen genügenden Prägedruck zu erzeugen. Auf Grund der hohen Schichtdicke ist eine gegenseitige Beeinflussung der beiden Reliefstrukturen während der Herstellung nicht zu befürchten. Es ist vorzugsweise vorgesehen, eine temperaturbeständige Trägerfolie, z.B. aus Polyester, beidseitig mit Lack zu beschichten und die beiden Lackschichten zu prägen.

Der Erfindung liegt nun die Aufgabe zugrunde, ein kostengünstiges und für die Massenproduktion geeignetes Verfahren zur Ausbildung eines Mehrschichtkörpers mit einer beidseitig strukturierten transparenten Strukturschicht anzugeben, sowie einen mit diesem Verfahren hergestellten Mehrschichtkörper anzugeben.

Die Aufgabe der Erfindung wird mit einer Transferfolie, insbesondere Heißprägefolie, gelöst, die eine Trägerfolie und eine auf der Trägerfolie angeordnete und von der Trägerfolie ablösbare Übertragungslage mit einer Strukturschicht umfaßt, wobei vorgesehen ist, daß die Trägerfolie auf ihrer der Strukturschicht zugewandten Seite eine Master-Reliefstruktur aufweist, daß die Strukturschicht auf ihrer der Trägerfolie zugewandten Seite eine zur Master-Reliefstruktur der Trägerfolie komplementäre erste Reliefstruktur aufweist, daß die Strukturschicht auf ihrer der Trägerfolie abgewandten Seite eine sich von der ersten Reliefstruktur unterscheidende zweite Reliefstruktur aufweist und daß die zweite Reliefstruktur mindestens bereichsweise mit einer Reflexionsschicht bedeckt ist.

Die Aufgabe wird weiter von einem Verfahren zur Herstellung einer Transferfolie gelöst, die eine Trägerfolie und eine auf der Trägerfolie angeordnete und von der Trägerfolie ablösbare Übertragungslage mit einer Strukturschicht umfaßt, wobei vorgesehen ist, daß in die Trägerfolie eine Master-Reliefstruktur eingebracht wird und/oder daß auf die Trägerfolie eine Master-Reliefstruktur aufgebracht wird, daß auf die Trägerfolie die Strukturschicht aufgebracht wird, wobei in die Strukturschicht eine zur Master-Reliefstruktur der Trägerfolie komplementäre erste Reliefstruktur abgeformt wird, daß die erste Reliefstruktur gegebenenfalls durch Aushärten der Strukturschicht fixiert wird, daß in die Strukturschicht eine von der ersten Reliefstruktur verschiedene zweite Reliefstruktur abgeformt wird, und daß auf die zweite Reliefstruktur mindestens bereichsweise eine Reflexionsschicht aufgebracht wird.

Weiter wird die Aufgabe mit einem Mehrschichtkörper mit einer Strukturschicht gelöst, wobei die Strukturschicht die Vorderseite des Mehrschichtkörpers bildet und in eine die Vorderseite des Mehrschichtkörpers bildende erste Oberfläche der Strukturschicht eine erste Reliefstruktur abgeformt ist, wobei vorgesehen ist, daß in eine der ersten Oberfläche der Strukturschicht gegenüberliegende zweite Oberfläche eine zweite Reliefstruktur abgeformt ist, daß die zweite Reliefstruktur verschieden von der ersten Reliefstruktur ist, daß die zweite Reliefstruktur mindestens bereichsweise von einer Reflexionsschicht bedeckt ist, und daß die Strukturschicht zwischen den mittleren Niveaus der beiden Reliefstrukturen eine Dicke < 10 µm aufweist, vorzugsweise eine Dicke < 5 µm aufweist.

Die erste und die zweite Reliefstruktur können dabei einerseits dadurch verschieden sein, dass unterschiedliche Reliefstrukturen im Hinblick auf deren Muster, Profiltiefe, Spatialfrequenz, Periode, Oberflächenprofil, Vorzugsrichtung usw. gebildet sind. Die erste und die zweite Reliefstruktur können aber auch ganz oder weitgehend identisch ausgebildet sein und lediglich in der Ebene gegeneinander verschoben angeordnet sein, so dass beispielsweise ein Tal bzw. eine Vertiefung in der ersten Reliefsstruktur nicht mit einem Tal in der zweiten Reliefstruktur sondern mit einem Berg in der zweiten Reliefstruktur zusammentrifft. Gleiche Musterbereiche der ersten und zweiten Reliefstruktur liegen somit nicht senkrecht übereinander, sondern zueinander versetzt vor. Die erste und die zweite Reliefstruktur können dabei lediglich um einen Bruchteil oder um ein Vielfaches einer Periode gegeneinander verschoben sein. Die erste und die zweite Reliefstruktur können weiterhin alternierend angeordnet sein, so dass in einem Bereich, in dem die erste Reliefstruktur angeordnet ist, senkrecht dazu die zweite Reliefstruktur nicht angeordnet ist, und umgekehrt. Außerdem können die erste und die zweite Reliefstruktur deckungsgleich angeordnet sein oder sich lediglich bereichsweise überschneiden. Weiterhin können die erste und die zweite Reliefstruktur sich gegenseitig ergänzende Muster oder Darstellungen zeigen.

Des weiteren wird die Aufgabe mit einem Sicherheitsdokument mit einem vorgenannten Mehrschichtkörper gelöst.

Durch die Erfindung wird es ermöglicht, Strukturschichten mit beidseitig abgeformten Reliefstrukturen in sehr geringer Schichtdicke ohne gegenseitige Beeinflussung der beiden Reliefstrukturen während des Herstellungsprozesses auszubilden. Die Trägerfolie mit der Master-Reliefstruktur sorgt zum einen für ausreichende mechanische Stabilität für die Abformung der zweiten Reliefstruktur und schützt zum anderen die erste Reliefstruktur während des Abformprozesses für die zweite Reliefstruktur.

Die Dicke der Strukturschicht kann dabei so reduziert sein, daß sie beim Aufbringen auf ein Sicherheitsdokument nicht aufträgt und im Gebrauch, beispielsweise durch Knickbeanspruchungen, nicht beschädigt wird. Durch die geringe Dicke der Strukturschicht ist weiter eine höhere Fälschungssicherheit gegeben, denn die dünne Strukturschicht kann ohne Zerstörung nicht wieder von einem zu schützenden Dokument oder Gegenstand abgelöst werden. Desweiteren lassen sich neuartige optische Effekte aufgrund der geringen Distanz zwischen den beiden Reliefstrukturen generieren.

Es ist dabei insbesondere möglich, dass die erste Reliefstruktur und die zweite Reliefstruktur im Querschnitt gesehen ineinander eingreifen beziehungsweise miteinander verzahnt ausgebildet sind.

Durch das erfindungsgemäße Verfahren können die auf den beiden Seiten der Strukturschicht ausgebildeten Reliefstrukturen unabhängig voneinander ausgebildet werden, wobei die Reliefstruktur ausschließlich nach funktionellen Kriterien ausgebildet sein kann. Weiter ist es möglich, in der Praxis bewährte und für eine Massenproduktion geeignete Verfahrensschritte und Vorrichtungen zu verwenden und in einem Rolle-zu-Rolle-Prozeß die Strukturschicht beidseitig mit Reliefstrukturen auszubilden.

Weil die erste Reliefstruktur an der Oberfläche des Mehrschichtkörpers angeordnet ist, kann ein durch den Mehrschichtkörper dargestelltes Sicherheitsmerkmal auch taktil erfaßt werden. Es kann damit auch von sehbehinderten Personen erfühlt werden und ist durch ein herkömmliches Kopier- oder Druckverfahren nicht nachahmbar.

Bei der Strukturschicht kann es sich vorzugsweise um eine transparente Strukturschicht handeln. Die Strukturschicht kann aber auch nur partiell transparent ausgebildet sein und beispielsweise eingefärbte Bereiche umfassen oder einen opaken Druck beinhalten. Vorteilhafterweise sind solche Teilbereiche der Strukturschicht im Register zur ersten und/oder zweiten Reliefstruktur ausgebildet.

Weitere vorteilhafte Ausbildungen sind in den Unteransprüchen bezeichnet.

Die Strukturschicht kann zwischen den mittleren Niveaus der beiden Reliefstrukturen eine Dicke < 10 µm aufweisen, vorzugsweise eine Dicke < 5 µm.

Es kann vorgesehen sein, daß die Master-Reliefstruktur durch eine Prägung in der Trägerfolie gebildet ist. Es können Prägeverfahren vorgesehen sein, die bei der Herstellung von Folienkörpern angewendet werden. Wenn es sich bei der Trägerfolie um eine thermoplastische Trägerfolie handelt, kann die Master-Reliefstruktur mit einem thermischen Prägeverfahren durch eine Prägewalze unter Druck und Temperatur eingebracht werden. Eine derart geprägte Trägerfolie ist hinreichend stabil, um die Deformation der Strukturschicht beim Warmprägen der zweiten Reliefstruktur auszuschließen.

Es kann aber auch vorgesehen sein, daß die Trägerfolie eine Schicht aufweist, in die die Master-Reliefstruktur abgeformt ist. Es kann beispielsweise vorgesehen sein, auf die Trägerfolie eine thermoplastische Replizier-Lackschicht aufzubringen, die Lackschicht zu trocknen und danach in diese Lackschicht die Master-Reliefstruktur abzuformen.

Weiter kann vorgesehen sein, auf die Trägerfolie einen UV-härtbaren Replizierlack aufzubringen, und während des Aufbringens mit einer Prägewalze die Master-Reliefstruktur einzubringen. Die zum Aushärten des UV-Lacks benötigte UV-Quelle kann entweder in einer transparenten Prägewalze oder unter der Trägerfolie angeordnet sein. In einer abgewandelten Ausbildung kann vorgesehen sein, die Master-Reliefstruktur durch partielle Bestrahlung der UV-härtbaren Replizierlackschichtder Trägerfolie abzuformen und die nicht gehärteten Bereiche anschließend durch Waschen zu entfernen.

Zur Ausbildung der Strukturschicht kann vorgesehen sein, auf die Trägerfolie einen thermoplastischen Replizier-Lack aufzubringen und auf diese Weise die erste Reliefstruktur abzuformen. Nach dem Trocknen des Lacks kann durch eine beheizte Prägewalze die zweite Reliefstruktur abgeformt werden.

Es kann weiter vorgesehen sein, auf die Trägerfolie einen UV-härtbaren Lack aufzubringen und den Lack während der Abformung der zweiten Reliefstruktur durch UV-Licht zu härten. Dieses Kaltprägeverfahren zeichnet sich durch eine hohe Abbildungsqualität für die erste Reliefstruktur aus, weil der UV-härtbare Lack besonders fließfähig ausgebildet werden kann und so kleinste Kavitäten der Master-Reliefstruktur vollständig auszufüllen vermag. Von Vorteil ist, daß UV-härtbarer Lack eine besonders temperaturstabile Schicht ausbildet. Es kann deshalb auch vorgesehen sein, die Strukturschicht aus zwei Schichten auszubilden, wobei vorteilhafterweise die erste Schicht aus UV-härtbarem Lack und die zweite Schicht aus thermoplastischem Lack ausgebildet sein kann. Beide Schichten sollten vorteilhafterweise mit gleicher optischer Brechzahl ausgebildet sein, so daß der Schichtaufbau optisch nicht wahrnehmbar ist.

In einer weiteren vorteilhaften Ausgestaltung kann vorgesehen sein, daß die Trägerfolie eine partielle Bedruckung aufweist. Die partielle Bedruckung kann besonders vorteilhaft sein, um Master-Reliefstrukturen mit kleinem Tiefen-zu-Breiten-Verhältnis besonders einfach auszubilden. Weitere Effekte lassen sich erzielen, wenn beispielsweise die Trägerfolie eine rauhe Oberfläche aufweist und der Drucklack nach dem Trocknen eine glatte Oberfläche aufweist oder umgekehrt. Die Eigenschaften des Drucklacks können beispielsweise durch seinen Festkörperanteil bestimmt sein. Die Dicke der aufgedruckten Schicht kann unterschiedlich eingestellt sein, beispielsweise zwischen 2 µm und 5 µm. Die partielle Bedruckung kann auch ergänzend zu dem vorstehend beschriebenen Prägen der Master-Reliefstruktur vorgesehen sein, beispielsweise um die Master-Reliefstruktur zu individualisieren. Vorzugsweise kann dafür ein durch Software steuerbares Druckverfahren vorgesehen sein. Auf diese Weise kann selbst für kleine Stückzahlen eine kostengünstige Individualisierung der Strukturschicht durchgeführt werden.

Bei der aufgedruckten Schicht kann es sich um eine Farbschicht und/oder eine Nanopartikel enthaltende Schicht handeln.

Es kann vorgesehen sein, daß zwischen der Trägerfolie und der Übertragungslage eine Ablöseschicht angeordnet ist. Die Ablöseschicht kann vorgesehen sein, wenn die für die Trägerfolie und die Strukturschicht gewählte Materialpaarung das Ablösen der Trägerfolie erschwert oder unmöglich macht. Die Ablöseschicht kann nach dem Ablösen auf der Trägerfolie oder auf der Übertragungslage verbleiben.

Es kann weiter vorgesehen sein, daß auf der ersten Reliefstruktur der Strukturschicht eine Schutzschicht ausgebildet ist. Es kann auch vorgesehen sein, daß die Strukturschicht als Schutzschicht wirkt.

Die Reflexionsschicht kann als metallische Schicht und/oder dielektrische Schicht oder Schichtfolge ausgebildet sein. Bei der dielektrischen Schicht kann es sich um eine Schicht mit einer geringeren optischen Brechzahl als die Strukturschicht handeln, so daß Totalreflexion an der Grenzschicht zwischen der Strukturschicht und der dielektrischen Schicht ausgebildet sein kann. Es kann sich aber auch um eine Schichtfolge von HRI-Schichten (High Refraction Index) und LRI-Schichten (Low Refraction Index) handeln. Derartige Dünnfilme können ausgeprägte wechselnde Farbeindrücke erzeugen. Unter der dielektrischen Schicht angeordnete Bereiche können deshalb bei geeigneter Blickrichtung sichtbar sein, denn die Totalreflexion tritt in Abhängigkeit von den Brechungsindizes der Strukturschicht und der dielektrischen Schicht und dem Einfallswinkel des Lichtes ein.

Bei der ersten Reliefstruktur kann es sich um eine Reliefstruktur handeln, die taktil erkennbar ist. Bei einer solchen Struktur können die Erhebungen in einem solchen Abstand angeordnet sein, daß mindestens zwei benachbarte Nervenenden der menschlichen Haut erregbar sind. Die Reliefstruktur kann auch so ausgebildet sein, daß in einem mit der ersten Reliefstruktur in Bewegungskontakt gebrachten Körper Schallschwingungen erregt werden, beispielsweise beim Darüberstreifen mit einem Fingernagel.

Weiter kann vorgesehen sein, daß die erste Reliefstruktur optisch erkennbar ist. Die erste Reliefstruktur kann so ausgebildet sein, daß sie sowohl optisch als auch taktil erkennbar ist.

Bei der ersten und/oder der zweiten Reliefstruktur handelt es sich vorzugsweise um nicht zufällige Reliefstrukturen. Unter einer nicht zufälligen Reliefstruktur wird eine solche verstanden, sie gezielt gebildet wird und nicht aufgrund zufälliger Oberflächenrauhigkeiten von Materialoberflächen auftritt. So sind nicht zufällige Reliefstrukturen insbesondere daran erkennbar, dass diese gezielt reproduzierbar sind.

Wird beispielsweise eine Reliefstruktur mit einer gewünschten Profilform beispielsweise im industriellen Maßstab in einer Endlosträgerfolie erzeugt, so dient dazu üblicherweise ein entsprechend strukturierter Stempel, Zylinder oder ähnliches, welcher eine endliche Länge aufweist. Aufgrund des kontinuierlichen Einsatzes des strukturierten Werkzeugs auf der Endlosträgerfolie wiederholen sich die abgeformten Reliefstrukturen in regelmäßigen Abständen auf der Trägerfolie und sind somit erkennbar nicht zufällige Reliefstrukturen, auch wenn auf den ersten Blick lokal eine zufällige Reliefstruktur vorzuliegen scheint.

Eine nicht zufällige Reliefstruktur ist weiterhin beispielsweise daran erkennbar, dass bestimmte, üblicherweise nicht oder nur sehr selten vorkommende Profilformen gehäuft, periodisch oder quasiperiodisch auftreten. Während von einer zufälligen Reliefstruktur wie einer Oberflächenrauhigkeit eine eher undefinierte und abgerundete Profilform zu erwarten ist, zeigen nicht zufällige Reliefstrukturen beispielsweise exakte und geometrisch ausgebildete Profilformen wie Rechteckprofile, Sägezahnprofile, Halbkugelprofile, Blazestrukturen oder ähnliches. Weiterhin zeigen nicht zufällige Reliefstrukturen beispielsweise Profile mit treppenartig gestaffelter Profiltiefe, mit konstanter Profiltiefe, wie insbesondere die in DE 100 54 503 B4 beschriebenen binären Profile, usw.

Ein Spezialfall für ein treppenartiges Profil ist beispielsweise ein rechteckförmiges Profil, wobei die lokalen Profiltiefen lediglich diskrete Niveaus annehmen können. Die Abstände zwischen zwei benachbarten Vertiefungen liegen dabei bevorzugt im Bereich von 0,5 bis 50 µm. Die Profiltiefe beträgt, bezogen auf ein mittleres Niveau, vorzugsweise < 5µm.

Mikroskopisch feine, nicht zufällige Reliefstrukturen mit lokal variierender Strukturtiefe sind beispielsweise in EP 992 020 B1 offenbart.

Es hat sich bewährt, wenn die erste Reliefstruktur und/oder die zweite Reliefstruktur eine Mikrostruktur, deren Abmessungen unterhalb der Auflösungsgrenze des menschlichen Auges liegen, umfasst.

Die erste Reliefstruktur und/oder die zweite Reliefstruktur kann generell als Mikrostruktur, deren Abmessungen unterhalb der Auflösungsgrenze des menschlichen Auges liegt, und/oder als Makrostruktur, welche für das menschliche Auge sichtbar ist, ausgebildet sein. Dabei kann eine Makrostruktur neben einer Mikrostruktur vorliegen und/oder von einer Mikrostruktur überlagert ein. Eine Mikrostruktur kann dabei einen optischen Effekt aufweisen, der das Vorhandensein einer Makrostruktur simuliert.

Die erste Reliefstruktur und/oder die zweite Reliefstruktur können als Mattstruktur und/oder als diffraktive Struktur und/oder als refraktive Struktur und/oder als Makrostruktur ausgebildet sein.

Bei der Mattstruktur handelt es sich um eine diffraktive Struktur mit stochastischem Verlauf, so daß einfallendes Licht in zufälliger Weise zerstreut wird. Mattstrukturen besitzen im mikroskopischen Maßstab feine Reliefstrukturelemente, die das Streuvermögen bestimmen und mit statistischen Kenngrößen wie z.B. dem Mittenrauhwert Ra, der Korrelationslänge Ic usw. beschrieben werden können. Bevorzugte Mattstrukturen weisen einen Mittenrauhwert Ra im Bereich von 20 nm bis 2000 nm, vorzugsweise im Bereich von 50 nm bis 500 nm auf. Die Korrelationslänge Ic liegt vorzugsweise im Bereich von 200 nm bis 50000 nm, insbesondere im Bereich von 500 nm bis 10000 nm.

Diffraktive Strukturen sind Strukturen, die auf Lichtbeugung beruhende optische Effekte ausbilden, beispielsweise Beugungsgitter oder Hologramme. Dabei kann es sich um klassische 2D/3D- oder 3D-Hologramme handeln, welche basierend auf einer Oberflächenstruktur die Darstellung dreidimensionaler Informationen erlauben. Lokal betrachtet kann das Profil eines holographisch generierten Hologramms, wie beispielsweise eines Fourier-Hologramms, als näherungsweise periodisch betrachtet werden, wobei typische Linienzahlen im Bereich von 300 bis 2000 l/mm und typische Strukturtiefen im Bereich von 50 bis 800 nm liegen.

Ein computergeneriertes Hologramm, wie beispielsweise das so genannte Kinoform, kann den Eindruck eines stochastischen Oberflächenreliefs erwecken und eine asymmetrische Beugungswirkung aufweisen. Eine typische Strukturtiefe beträgt die Hälfte oder ein Vielfaches der Wellenlänge des einfallenden Lichts und richtet sich danach, ob das Kinoform seine Wirkung in Transmission oder Reflexion entfalten soll.

Die Reliefstruktur kann beispielsweise als Lineargitter oder als Kreuzgitter ausgebildet sein, d.h. sich in einer durch x-y-Koordinaten aufgespannten Ebene in x oder/und y-Richtung erstrecken. Bei der Reliefstruktur kann es sich auch um eine Struktur handeln, die sich in drei Richtungen erstreckt ist, beispielsweise um ein Hexagonalgitter.

Bei den refraktiven Strukturen handelt es sich um Strukturen, die auf Lichtbrechung beruhende optische Effekte ausbilden, beispielsweise Mikrolinsen. Derartige Mikrolinsen werden üblicherweise nicht einzeln, sondern in einem regelmäßigen Raster nebeneinander angeordnet verwendet. Es kann vorzugsweise vorgesehen sein, den Durchmesser der Mikrolinsen zwischen 3 µm und 80 µm auszubilden, weiter vorzugsweise zwischen 5 µm und 50 µm auszubilden.

Diese Strukturen weisen i.a. Abmessungen auf, die unterhalb der Auflösungsgrenze des menschlichen Auges liegen.

Bei den Makrostrukturen handelt es sich um Strukturen, deren Abmessungen durch das menschliche Auge wahrnehmbar sind, beispielsweise Designelemente, die durch Strukturbereiche gebildet sind.

Solche Makrostrukturen können beispielsweise durch Linsenelemente oder speziell ausgeformte, einen sichtbaren linsenartigen Effekt erzeugende, beugungsoptisch wirksame Reliefstrukturen erzeugt sein, wie insbesondere durch Reliefstrukturen gemäß der DE 102 54 499 B4 oder der DE 102 54 500 B4. Die makroskopisch sichtbare Struktur wird hierbei im wesentlichen mittels mit dem Auge nicht auflösbaren, beugungsoptisch wirksamen Reliefstrukturen simuliert. Weiterhin kann eine Makrostruktur gemäß DE 102 16 561 A1 ausgebildet sein, die eine zumindest stückweise stetige und differenzierbare Funktion ist, wenigstens in Teilbereichen gekrümmt ist und deren benachbarte Extremwerte wenigstens 0,1 mm voneinander entfernt sind.

Von einer Mikrostruktur überlagerte Makrostrukturen sind beispielsweise der WO 03/084764 A2 zu entnehmen. Hier ist eine Beugungsstruktur beschrieben, welche durch eine additive oder eine subtraktive Überlagerung einer makroskopischen Struktur mit einem mikroskopisch feinen Reliefprofil gebildet ist.

In vorteilhaften Ausgestaltungen ist vorgesehen, daß die erste Reliefstruktur mit Antireflexwirkung und/oder als Diffusor und/oder schmutzabweisend ausgebildet ist. Zur Ausbildung einer schmutzabweisenden ersten Reliefstruktur kann weiter vorgesehen sein, daß die Strukturschicht hydrophob ausgebildet ist.

Es kann vorgesehen sein, daß die Breite bzw. Gitterperiode der komplementären ersten Reliefstruktur kleiner als die Lichtwellenlänge ist, wenn es sich um eine optisch aktive Reliefstruktur zur Entspiegelung einer Oberfläche handelt. Für den Bereich des sichtbaren Lichtes heißt das unter Berücksichtigung der maximalen spektralen Empfindlichkeit des menschlichen Auges für die Lichtwellenlänge λ = 555 nm, daß die Gitterperiode b < 550 nm sein muss. Die für eine gute Entspiegelung notwendige Mindesttiefe der Reliefstruktur muss mindestens in der Größenordnung einer halben Lichtwellenlänge liegen, d.h. t > 275 nm.

Eine schmutzabweisende erste Reliefstruktur ist dadurch gebildet, daß sie auf hydrophobem Material ausgebildet ist und daß die Gitterperiode kleiner als die mittleren Abmessungen der Schmutzpartikel gewählt ist. Feine Schmutzpartikel, die Abmessungen in der Größenordnung von 2 bis 5 µm aufweisen, werden durch herabrollende Wassertropfen gebunden und so von der Reliefstruktur entfernt. Dabei wirken bereits die feinen Erhebungen der Reliefstruktur hydrophob, weil das Wasser wegen seiner Oberflächenspannung die Reliefstruktur nicht zu benetzen vermag.

Es kann vorgesehen sein, daß die erste und die zweite Reliefstruktur voneinander unabhängige optische Effekte ausbilden. Es kann aber auch vorgesehen sein, daß die erste und die zweite Reliefstruktur voneinander abhängige optische Effekte ausbilden. Ein solcher abhängiger optischer Effekt kann beispielsweise vorliegen, indem die erste Reliefstruktur und die zweite Reliefstruktur in Teilbereichen ausgebildet sind, die in der Zusammenschau eine Bildinformation bilden. Diese Bildinformation kann beispielsweise nur in einem begrenzten Blickwinkelbereich vollständig sichtbar sein, so daß ein blickwinkelabhängiger optischer Effekt ausgebildet ist. Besonders vorteilhaft ist die zumindest in einer Richtung registrierte Anordnung der ersten und der zweiten Reliefstruktur, welche wiederum registriert sein können zu einem in die Übertragungslage integrierten Druck oder zu einer Einfärbung.

Wie bereits weiter oben ausgeführt, kann die Strukturschicht mit verfügbaren und in der Praxis erprobten Verfahren erzeugt und strukturiert werden.

Es kann also vorgesehen sein, daß auf die Trägerfolie eine Ablöseschicht und/oder eine Schutzschicht vor dem Aufbringen der Strukturschicht aufgebracht werden bzw. wird. Dabei ist zu beachten, daß die zusätzlich auf die Master-Reliefstruktur aufgebrachte Ablöseschicht die Ausbildung der ersten Reliefstruktur beeinflussen kann. Die Master-Reliefstruktur muß deshalb ggf. um die Dicke der zusätzlich aufgebrachten Ablöseschicht reduziert werden.

Die Strukturschicht kann aus einer ersten und einer zweiten Schicht mit etwa gleichem Brechungsindex gebildet werden, wobei vorgesehen ist, daß auf die mit der ersten Reliefstruktur versehene ausgehärtete erste Schicht die zweite Schicht aufgebracht wird und die zweite Reliefstruktur in die zweite Schicht abgeformt wird. Wie bereits weiter oben begründet, kann vorteilhafterweise die erste Schicht aus einem strahlungshärtbaren Lack und die zweite Schicht aus einem thermoplastischen Lack ausgebildet sein. Die Materialwahl wird u.a. durch die gewünschte Funktion bestimmt, wie beispielsweise kratzfest, lösemittelresistent, schmutzabweisend etc.

In einer weiteren vorteilhaften Ausgestaltung ist vorgesehen, daß eine Kleberschicht aufgetragen wird, welche die Reflexionsschicht und die zweite Reliefstruktur abdeckt. Die Kleberschicht bedeckt also vollflächig die Strukturschicht, unabhängig davon, in welcher Weise die Strukturschicht und die Reflexionsschicht ausgebildet sind. Bei der Kleberschicht kann es sich vorzugsweise um einen Heißkleber handeln. Als weitere Kleber können Kaltkleber, druckempfindliche Kleber und UV-härtbare Kleber vorgesehen sein.

Ein mit der erfindungsgemäßen Strukturschicht ausgebildeter Mehrschichtkörper kann mit einer partiell abgetragenen oder eingeebneten ersten Reliefstruktur ausgebildet sein, beispielsweise um ihn zu personalisieren.

Es kann weiter vorgesehen sein, die erste Reliefstruktur des Mehrschichtkörpers partiell zu überdrucken.

In einer weiteren Ausgestaltung ist vorgesehen, daß die erste Reliefstruktur des Mehrschichtkörpers einen taktil erfassbaren Bereich aufweist. Dieser Bereich kann bereits in der ersten Reliefstruktur vorgesehen sein, er kann aber auch nachträglich durch partielles Abtragen oder Einebnen und/oder durch Überdrucken erzeugt sein.

Weiter kann vorgesehen sein, daß der taktil erfassbare Bereich im Register zu einer darunter angeordneten Struktur angeordnet ist, beispielsweise einer optisch wirksamen diffraktiven Struktur.

Im folgenden wird die Erfindung anhand von mehreren Ausführungsbeispielen unter Zuhilfenahme der beiliegenden Zeichnungen beispielhaft verdeutlicht.

Es zeigen
- Fig. 1: einen auf ein Trägersubstrat aufgebrachten erfindungsgemäßen Mehrschichtkörper in schematischer Schnittdarstellung;
- Fig. 2a bis 2e: Fertigungsstufen des Mehrschichtkörpers in Fig. 1 in schematischer Schnittdarstellung;
- Fig. 2f: das Aufbringen des Mehrschichtkörpers in Fig. 2e auf das Trägersubstrat;
- Fig. 3a: ein erstes Applikationsbeispiel;
- Fig. 3b: ein zweites Applikationsbeispiel;
- Fig. 4a bis 4c: ein erstes Ausführungsbeispiel zum Applizieren des erfindungsgemäßen Mehrschichtkörpers;
- Fig. 5: ein zweites Ausführungsbeispiel zum Applizieren des erfindungsgemäßen Mehrschichtkörpers;
- Fig. 6: ein drittes Ausführungsbeispiel zum Applizieren des erfindungsgemäßen Mehrschichtkörpers.

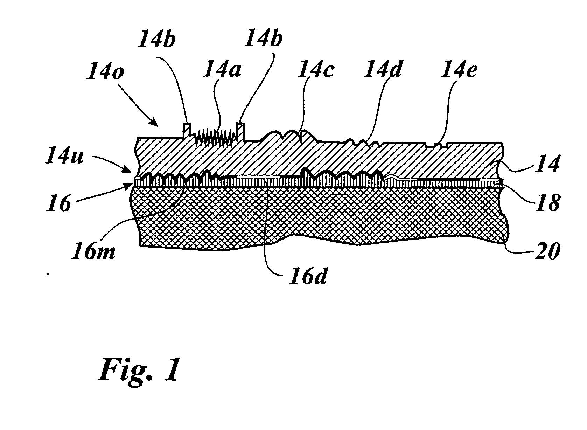

Fig. 1 zeigt einen Mehrschichtkörper 1, der aus einer transparenten Strukturschicht 14, einer Reflexionsschicht 16 und einer Kleberschicht 18 gebildet ist. Die Kleberschicht 18 verbindet den Mehrschichtkörper 1 mit einem Trägerkörper 20. Bei dem Trägerkörper 20 kann es sich beispielsweise um ein Sicherheitsdokument, wie einen Paß, eine Ausweiskarte oder eine Kreditkarte handeln. Der Mehrschichtkörper 1 kann auch als Sicherheitsmerkmal für Waren vorgesehen sein.

Die transparente Strukturschicht 14 weist auf ihrer oberen, der Kleberschicht 18 abgewandten Seite eine erste Reliefstruktur 14o auf, und weist auf ihrer unteren, der Kleberschicht 18 zugewandten Seite eine zweite Reliefstruktur 14u auf.

In dem in Fig. 1 dargestellten Ausführungsbeispiel sind in der ersten Reliefstruktur 14o Bereiche 14a, 14b, 14c, 14d und 14e ausgebildet, die sich in ihrer Strukturierung voneinander unterscheiden.

Bei dem Bereich 14a handelt es sich um einen Bereich mit einer sehr feinen Gitterstruktur mit einer Gitterkonstanten < 0,4 µm und einer Tiefe von > 0,2 µm, die im sichtbaren Bereich und bei senkrechter Beleuchtung außer dem Spiegelreflex keine Beugungsordnungen aufweist. Eine solche Struktur kann bei geeigneter Ausbildung wie eine Entspiegelung der Oberfläche wirken. Diese Entspiegelung kann vorgesehen sein, um Bereiche mit unterschiedlicher Helligkeit bei Betrachtung im Spiegelreflex auszubilden oder um beispielsweise die Farbsättigung eines unter dem Bereich angeordneten Dünnschichtelementes zu verbessern. Es kann eine Reflexion in der Größenordnung von 0,5% ausgebildet sein. Bei einer statt dessen vorgesehenen glatten Oberfläche ist eine Reflexion in der Größenordnung von 4 bis 5% zu verzeichnen, welche die vom Betrachter wahrgenommene Farbsättigung mindert und die Verifikation des Dünnschichtelementes über einen Farbwechsel beim Kippen beeinträchtigt. Wird eine derartige Struktur nur in Teilbereichen aufgebracht, beispielsweise entsprechend einem Text, so wird diese Information bei Betrachtung im Spiegelreflex erkennbar, währenddem sie unter üblichen Betrachtungsbedingungen kaum auffällt. Besonders vorteilhaft wird eine Entspiegelung in Kombination mit einer filigran teilmetallisierten Reflexionsschicht, welche vornehmlich transparente Bereiche umfaßt. Der dabei üblicherweise störende Reflex des aufgebrachten Folienelements wird durch die Entspiegelung weitestgehend unterdrückt.

Eine teilweise Kaschierung des Reflexes von der Oberfläche der Strukturschicht 14 kann auch durch eine leichte Mattierung der ersten Reliefstruktur 14o erzielt werden. Auf diese Weise kann der Glanzgrad der ersten Reliefstruktur 14o gezielt reduziert sein, wobei transmittiertes Licht nur wenig gestreut wird, so daß die unter der Strukturschicht 14 angebrachten Informationen deutlich erkennbar sind.

Es kann auch vorgesehen sein, die Bereiche 14a in einem Raster anzuordnen und das Reflexionsvermögen der Bereiche 14a in dem Raster zu variieren. Auf diese Weise kann die unterschiedliche Reflexion der Rasterelemente zu einer bildhaften Darstellung genutzt werden.

Die Reliefstruktur im Bereich 14a kann auch schmutzabweisend wirken, wenn die Strukturschicht 14 aus einem hydrophoben Material ausgebildet ist. Wegen des hohen Tiefen-zu-Breiten-Verhältnisses und der kleinen Gitterkonstante der Reliefstruktur im Bereich 14a können die in ihren Abmessungen größeren Schmutzpartikel nicht auf der Oberfläche der Reliefstruktur haften und werden durch Wassertropfen gebunden und von der Oberfläche entfernt. Bei dem Tiefen-zu-Breiten-Verhältnis handelt es sich um eine dimensionslose Zahl zur Charakterisierung vorzugsweise periodischer Strukturen, die "Berge" und "Täler" aufweisen. Mit Tiefe ist Höhe eines "Berges" bzw. die Tiefe eines "Tales" bezeichnet, mit Breite der Abstand zweier benachbarter "Berge". Der Selbstreinigungseffekt der Strukturschicht 14 im Bereich 14a kann die Lesbarkeit unter dem Bereich 14a angeordneter Informationen dauerhaft verbessern.

Die Bereiche 14b sind als Abstandshalter vorgesehen, die ein Verschmutzen oder Verkratzen des Bereichs 14a verhindern oder zumindest vermindern sollen. Wenn es sich bei dem Bereich 14a um einen größerflächigen Bereich handelt, können Bereiche 14b nicht nur an den Bereichsrändern, sondern auch innerhalb des Bereichs 14a vorzugsweise in regelmäßigem Abstand verteilt angeordnet sein.

Der Bereich 14c vermittelt den visuellen Eindruck eines makroskopischen Oberflächenreliefs, obwohl er eine maximale Strukturtiefe von lediglich einigen Mikrometern aufweist. Solche Strukturen sind üblicherweise in Schichten eingebettet. Das makroskopische Oberflächenrelief ist im reflektierten Licht sichtbar, beeinträchtigt jedoch nicht die Erkennbarkeit auf dem Trägersubstrat 20 aufgebrachter Informationen oder in dem ersten Oberflächenbereich 14u eingebrachter reflektierender Strukturen.

Bei dem Bereich 14d handelt es sich um eine diffraktive Struktur, beispielsweise um ein Fourier-Hologramm, das dazu vorgesehen sein kann, bei Beleuchtung mit einem Laser auf einem Schirm eine verborgene Information darzustellen. Die im Bereich 14d ausgebildete diffraktive Struktur verändert die optische Wirkung darunter angeordneter Strukturen nur wenig.

Der Bereich 14e ist mit einem Oberflächenrelief versehen, dessen Erhebungen und Vertiefungen solche geringen Abmessungen haben, daß sie ohne optische Hilfsmittel nicht wahrnehmbar sind. Solche Strukturen sind üblicherweise in Lackschichten eingebettet. Das Oberflächenrelief kann mit einer Lupe oder mit einem Mikroskop wahrgenommen werden und stellt beispielsweise einen mikroskopisch feinen Text oder eine Bildinformation dar.

Weiter kann vorgesehen sein, daß die Reliefstruktur 14o zumindest partiell eine Reflexionsschicht aufweist, die beispielsweise als metallische oder dielektrische Schicht oder eine Abfolge von dünnen Metallschichten und/oder dielektrischen Schichten ausgebildet sein kann. Eine solche zusätzliche Reflexionsschicht kann beispielsweise durch Bedampfen aufgebracht werden, bevor die Strukturschicht 14 abgeformt wird. Besonders vorteilhaft kann eine partielle Ausbildung der Reflexionsschicht im Register zu Bereichen der Reliefstruktur 14o vorgesehen sein.

Die zweite Reliefstruktur 14u ist mit einem Oberflächenrelief ausgebildet, das diffraktive Strukturen, wie ein Hologramm oder ein Kinegram^{®} umfassen kann. Es kann sich dabei auch um individualisierte Informationen handeln, beispielsweise in Form alphanumerischer Zeichen oder eines Strichcodes.

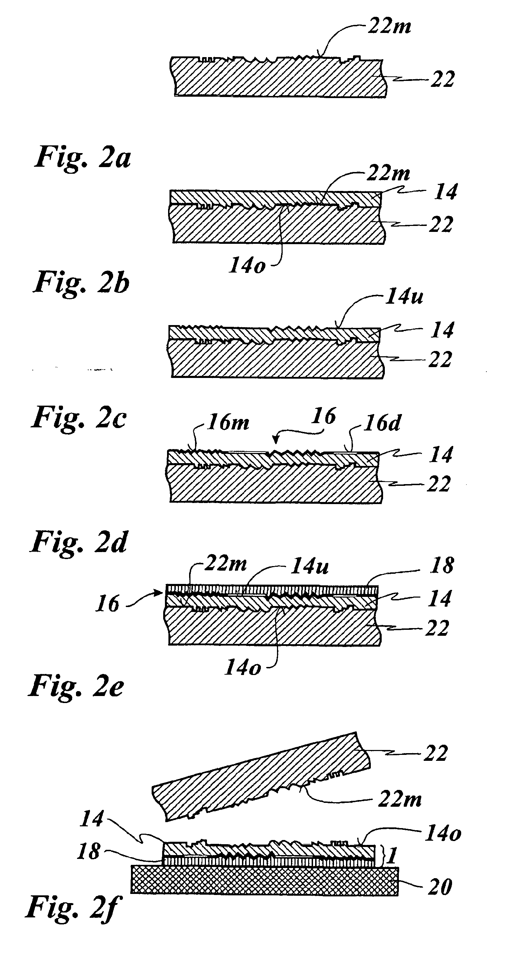

Die Fig. 2a bis 2e zeigen nun Fertigungsstufen des in Fig. 1 dargestellten Mehrschichtkörpers 1.

Fig. 2a zeigt eine Trägerfolie 22, in die eine zu der ersten Reliefstruktur 14o (siehe Fig. 1) komplementär ausgebildete Master-Reliefstruktur 22m abgeformt ist. Bei der Trägerfolie 22 kann es sich um eine Polyesterfolie oder eine Polypropylenfolie oder Folie aus BOP mit einer Dicke von 6 bis 150 µm, vorzugsweise im Bereich 12 bis 70 µm, handeln. Die Master-Reliefstruktur 22m kann beispielsweise durch Heißprägen direkt in der Trägerfolie erzeugt sein. Dazu kann eine erhitzte Prägewalze in Kontakt mit der Trägerfolie gebracht sein.

In einer weiteren Ausbildung kann vorgesehen sein, daß die Trägerfolie 22 mit einer Lackschicht versehen wird, in welche die Master-Reliefstruktur 22m abgeformt wird. Insbesondere zur Ausbildung besonders feiner Master-Reliefstrukturen 22m, wie sie für entspiegelte Oberflächen benötigt werden, kann vorgesehen sein, daß es sich um einen UV-härtbaren Lack handelt, in den die Master-Reliefstruktur 22m durch UV-Replikation eingebracht wird. Der UV-härtbare Lack kann besonders fließfähig eingestellt werden, so daß er auch engste Kavitäten der Prägewalze vollständig auszufüllen vermag und besonders tiefe Strukturen auszubilden vermag. Der UV-härtbare Lack kann unmittelbar durch UV-Licht, das durch die Trägerfolie oder die transparente Prägewalze dringt, ausgehärtet werden. Es kann sich bei der Prägewalze aber auch um eine optische Prägewalze handeln, bei der die Master-Reliefstruktur 22m durch optische Abbildung übertragen wird, der UV-Lack partiell ausgehärtet wird und in einer nachgeordneten Waschstation unausgehärteter UV-Lack ausgewaschen wird.

Bei dem UV-härtbaren Lack kann es sich beispielsweise um einen der folgenden Lacke handeln:
Monomere oder oligomere Polyesteracrylate, Polyetheracrylate, Urethanacrylate oder Epoxyacrylate sowie aminmodifizierte Polyesteracrylate, aminmodifizierte Polyetheracrylate oder aminmodifizierte Urethanacrylate.

Es kann aber auch vorgesehen sein, daß es sich um einen thermoplastischen Lack handelt, der mittels Heißprägen unter Druck und Temperatur repliziert wird. Es kann sich dabei beispielsweise um einen Lack folgender Zusammensetzung handeln:

| **Bestandteil** | **Gewichts-Teile** |
|---|---|
| Methylethylketon | 400 |
| Ethylacetat | 260 |
| Butylacetat | 160 |
| Polymethylmethacrylat (Erweichungspunkt ca. 170 °C) | 150 |
| Styrolcopolymerisat (Erweichungspunkt ca. 100 °C) | 30 |

Der Lack wird nach dem Auftragen getrocknet und kann dann repliziert werden.

Wie die vorstehend beschriebenen Beispiele verdeutlichen, können bei dem erfindungsgemäßen Verfahren die Eigenschaften der Master-Reliefstruktur in weiten Grenzen beeinflußt werden, wobei für die Massenproduktion geeignete Prozeßschritte anwendbar sind.

Fig. 2b zeigt nun die replizierte bzw. bedruckte Trägerfolie 22, auf der die transparente Strukturschicht 14 durch Drucken, Besprühen oder Aufrakeln vollflächig aufgebracht ist. Die Strukturschicht 14 kann als thermoplastischer Lack oder als UV-härtbarer Lack oder Abfolge von Schichten (die zum Teil auch nur in Teilbereichen vorhanden sein können) in einer Schichtdicke von 0,5 µm bis 10 µm mittels Druckwalze aufgetragen sein. Thermoplastischer Lack kann nach dem Trocknen, wie in Fig. 2c dargestellt, heißgeprägt werden. Bei Verwendung von UV-härtbarem Lack kann vorgesehen sein, die in Fig. 2c dargestellte Fertigungsstufe unmittelbar beim Auftragen der Strukturschicht 14 durchzuführen und den Lack durch UV-Bestrahlung zu härten.

Die erste Reliefstruktur 14o ist nun in der Strukturschicht 14 abgeformt, wobei die Strukturschicht 14 die Master-Reliefstruktur 22m der Trägerfolie 22 völlig ausfüllt. Dabei muß die Strukturschicht 14 nicht homogen ausgestaltet sein, sondern sie kann auch einen integrierten Druck aufweisen, oder flureszierende oder eingefärbte Teilbereiche oder Nanopartikel enthalten.

In der in Fig. 2c dargestellten Fertigungsstufe ist nun in die Strukturschicht 14 die zweite Reliefstruktur 14u abgeformt (siehe Fig. 1). Dieser Fertigungsschritt kann durch Heißprägen der von der Trägerfolie 22 abgewandten Seite der Strukturschicht 14ausgeführt sein oder wie vorstehend beschrieben, durch Kaltprägen beim Auftragen der Strukturschicht 14 auf die Trägerfolie 22.

Es kann aber auch vorgesehen sein, daß die Strukturschicht 14 aus einer ersten und einer zweiten Schicht gebildet wird, wobei die erste Schicht mit der Reliefstruktur 14o und die zweite Schicht mit der Reliefstruktur 14u ausgebildet ist. Die zweite Schicht wird dabei auf die ausgehärtete erste Schicht aufgetragen, geprägt und ausgehärtet. Die mehrschichtige Ausbildung der Strukturschicht kann vorgesehen sein, um die Materialzusammensetzung und das Ausbilden der Reliefstruktur zu optimieren. Vorzugsweise ist vorgesehen, daß die erste und die zweite Schicht mit annähernd gleichem Brechungsindex ausgebildet sind, so daß die Strukturschicht 14 optisch als homogene Schicht ausgebildet ist.

Fig. 2d zeigt nun die vierte Fertigungsstufe, bei der auf die zweite Reliefstruktur 14u eine Reflexionsschicht 16 aufgebracht ist. Die Reflexionsschicht 16 kann beispielsweise als partielle metallische Schicht 16m aus einem gut reflektierenden Metall, wie Gold, Silber, Aluminium oder Kupfer, ausgebildet sein. In dem in Fig. 2d dargestellten Beispiel sind die nichtmetallischen Bereiche der Reflexionsschicht 16 mit einer dielektrischen Schicht 16d ausgefüllt.

Die Bereiche der Reflexionsschicht 16, die mit der metallischen Schicht 16m ausgebildet sind, reflektieren einfallendes Licht blickwinkelunabhängig, hingegen können die mit der dielektrischen Schicht 16d versehenen Bereiche der Reflexionsschicht 16 in Verbindung mit der Strukturschicht 14 die blickwinkelabhängige Totalreflexion ausbilden. Es kann sich aber auch um eine Schichtfolge von HRI-Schichten (High Refraction Index) und LRI-Schichten (Low Refraction Index) handeln. Derartige Dünnfilme können ausgeprägte wechselnde Farbeindrücke erzeugen. Es kann sich auch um eine Abfolge von dielektrischen Dünnschichten mit unterschiedlichen Brechungsindizes handeln oder um eine Abfolge von metallischen und dielektrischen Schichten. Derartige Schichtpakete können beim Kippen klar definierte Farbwechsel aufgrund von Interferenzeffekten aufweisen.

Die Fig. 2e zeigt die fünfte und zugleich letzte Fertigungsstufe des auf der Trägerfolie 22 aufgebrachten Mehrschichtkörpers 1 aus Fig. 1, bei der auf die Reflexionsschicht 14 eine Kleberschicht 18 aufgebracht ist. Bei der Kleberschicht 18 kann es sich vorzugsweise um einen Schmelzkleber handeln.

Es kann beispielsweise ein Kleber folgender Zusammensetzung vorgesehen sein:

| **Bestandteil** | **Gewichtsteile** |
|---|---|
| Methylethylketon | 550 |
| Ethylacetat | 175 |
| Cyclohexanon | 50 |
| Polyurethanharz (Fp ≥ 200 °C) | 100 |
| Polyvinylchlorid Terpolymer (Tg = 90 °C) | 120 |
| Siliciumdioxid | 5 |

Fig. 2f zeigt nun den auf dem Trägerkörper 20 aufgebrachten Mehrschichtkörper 1, von dem die Trägerfolie 22 nach dem Aufbringen des Mehrschichtkörpers 1 abgezogen ist. Der Mehrschichtkörper 1 und die Trägerfolie 22 sind gegenüber der in den Fig. 2a bis 2e dargestellten Lage um 180° gedreht, so daß die erste Reliefstruktur 14o nun die von dem Trägerkörper 20 abgewandte Oberseite des Mehrschichtkörpers 1 bildet.

Die Ablösbarkeit der Trägerfolie 22 von dem Mehrschichtkörper 1 kann durch die Materialpaarung der Trägerfolie 22 und der Strukturschicht 14 bewirkt sein. Es kann aber auch vorgesehen sein, zwischen der Trägerfolie 22 und der Strukturschicht 14 eine Ablöseschicht anzuordnen, die beispielsweise von einer Wachsschicht gebildet sein kann. Vorzugsweise handelt es sich bei der Ablöseschicht um eine extrem dünne Schicht, deren Dicke nur wenige nm beträgt. Erforderlichenfalls kann die Strukturschicht 14 als eine Schutzschicht ausgebildet sein, d.h. als eine besonders widerstandsfähige Schicht oder mehrschichtig ausgebildet sein, wobei die oberste Teilschicht als Schutzschicht ausgebildet ist.

Das vorstehend beschriebene Verfahren ist besonders gut für einen kontinuierlichen Rolle-zu-Rolle-Prozeß geeignet, bei dem der Mehrschichtkörper 1 schichtweise auf die Trägerfolie 22 aufgetragen und strukturiert wird.

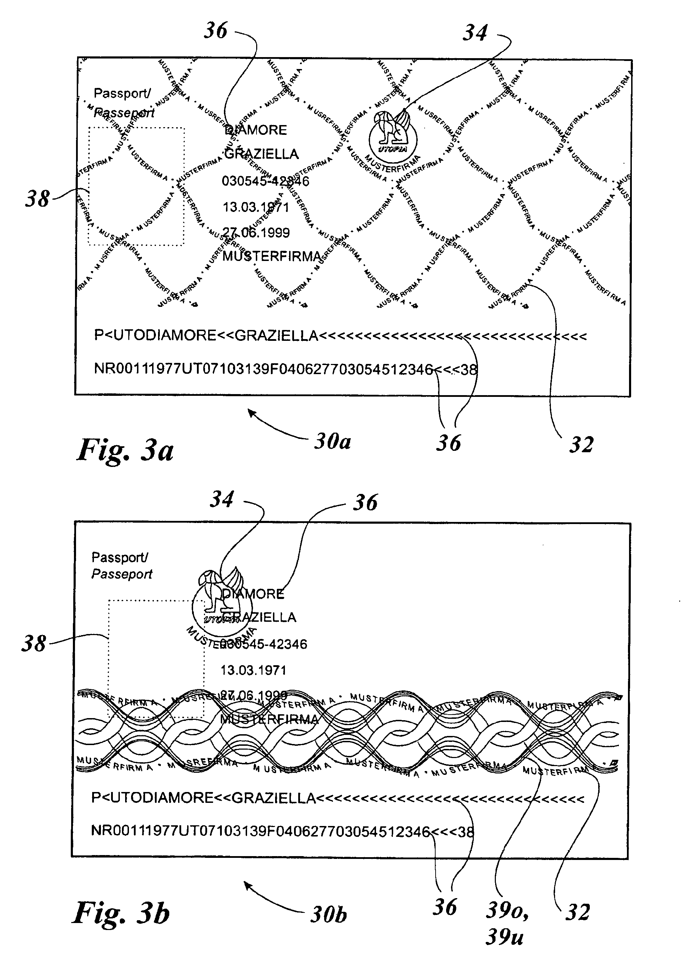

Die Fig. 3a zeigt nun ein erstes Applikationsbeispiel. Eine Übertragungsfolie ist als eine Laminierfolie zum Schutz eines Passes ausgebildet und weist u.a. einen Mehrschichtkörper 30a auf. Die Übertragungsfolie kann folgende Bestandteile bzw. Schichten umfassen:
- eine Trägerfolie, wie vorstehend in Fig. 2a bis 2f beschrieben,
- den Mehrschichtkörper 30a, dessen äußere Reliefstruktur der Trägerfolie zugewandt ist,
- eine wärmeaktivierbare Kleberschicht sowie
- gegebenenfalls eine zweite wärmeaktivierbare Kleberschicht und zwischen den beiden wärmeaktivierbaren Kleberschichten eine gedruckte Markierung.

In dem in Fig. 3a dargestellten Applikationsbeispiel sind streuende Bereiche 32 (siehe Pos. 14a in Fig. 1) auf der ansonsten glatten Oberfläche des Mehrschichtkörpers 30a ausgebildet, die nach dem Ablösen der Trägerfolie freigelegt ist. Die streuenden Bereiche 32 geben in Endlosmustern einen Schriftzug wieder, im dargestellten Beispiel den Schriftzug "MUSTERFIRMA". Die Lesbarkeit darunter liegender Informationen des zu schützenden Passes ist durch die streuenden Bereiche 32 nicht beeinträchtigt. Es kann vorgesehen sein, Bereiche 32 mit verschieden stark streuenden Mattstrukturen auszubilden, so daß beim Kippen oder Drehen farblose Schriftzüge mit unterschiedlicher Helligkeit erscheinen.

Der Mehrschichtkörper 30a weist weiter ein diffraktives Muster 34 auf, das in dem dargestellten Beispiel als Firmenlogo ausgebildet ist. Das diffraktive Muster 34 kann in der Oberseite des Mehrschichtkörpers 30 abgeformt sein, es kann aber auch in der Unterseite des Mehrschichtkörpers abgeformt und mit einer Reflexionsschicht hinterlegt sein.

Desweiteren weist der Mehrschichtkörper 30a personalisierte Daten 36 auf, die als diffraktive spiegelnde Bereiche in der Unterseite des Mehrschichtkörpers 30a ausgebildet sein können und beim Kippen oder Drehen als farbige Bereiche sichtbar sein können. Es kann sich dabei um die gleichen personalisierten Daten handeln, die neben einem Paßfoto, dessen Außenkontur 38 in Fig. 3a als unterbrochene Linie dargestellt ist, auf der durch den Mehrschichtkörper 30a geschützten Oberfläche des Passes aufgedruckt sind. Die Daten 36 können in dem Mehrschichtkörper 30a in versetzter Lage zu den auf der Oberfläche des Passes aufgedruckten Daten angeordnet sein.

Fig. 3b zeigt nun ein zweites Applikationsbeispiel. Ein prinzipiell wie der in Fig. 3a dargestellte Mehrschichtkörper 30a ausgebildeter Mehrschichtkörper 30b weist nun zusätzlich feine in der Oberseite des Mehrschichtkörpers 30b abgeformte Gitterstrukturen 39o auf. Es kann vorteilhafterweise vorgesehen sein, daß die Gitterstrukturen 39o so ausgebildet sind, daß sie unter anderen Betrachtungswinkeln aufleuchten als an der Unterseite des Mehrschichtkörpers 30b abgeformte, mit der Reflexionsschicht hinterlegte Gitterstrukturen 39u. Dazu kann beispielsweise vorgesehen sein, die Gitterstrukturen 39u mit unterschiedlichen Gitterkonstanten auszubilden und so blickwinkelabhängige Farbeffekte auszubilden.

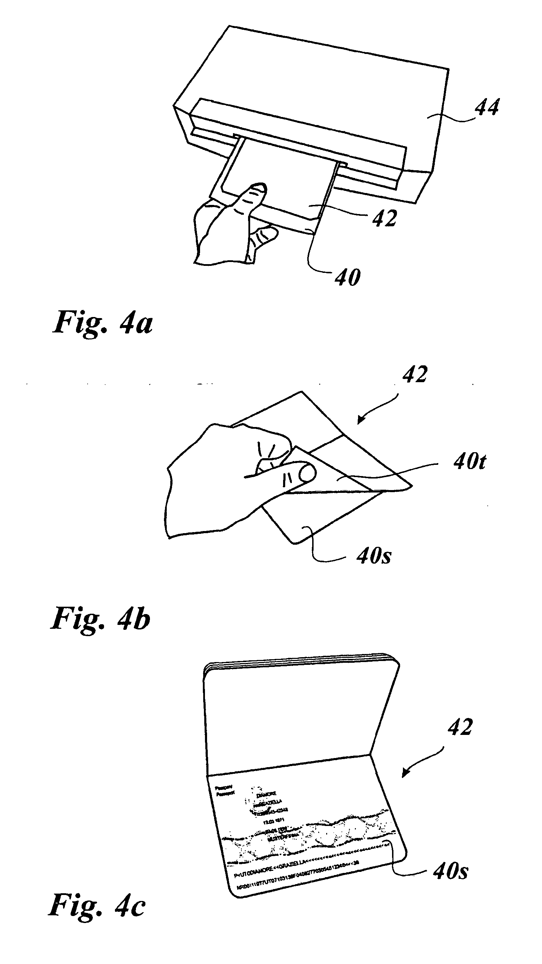

Die Fig. 4a bis 4c zeigen nun ein erstes Ausführungsbeispiel zum Applizieren des erfindungsgemäßen Mehrschichtkörpers, wobei es sich beispielsweise um die vorstehend beschriebenen Übertragungsfolien 30a (Fig. 3a) oder 30b (Fig. 3b) handeln kann.

Fig. 4a zeigt eine Laminierfolie 40 zum Sichern eines Ausweisdokuments 42, die in das Ausweisdokument 42 eingelegt ist und mit diesem in ein Laminiergerät 44 eingeführt wird. Auf diese Weise wird eine an der Unterseite der Laminierfolie 40 aufgebrachte Kleberschicht erwärmt und auf die zu sichernde Seite des Paßdokuments 42 gepreßt. Die Laminierfolie 40 weist, wie in Fig. 4b gezeigt ist, neben der nicht dargestellten Kleberschicht eine Trägerfolie 40t und eine mit Sicherheitsmerkmalen versehene Strukturschicht 40s auf.

Vorteilhafterweise kann vorgesehen sein, daß ein Bereich der Strukturschicht 40s über einem Loch oder einem Wasserzeichen der zu sichernden Seite des Paßdokuments 42 positioniert wird, so daß der optische Effekt der Strukturschicht 40s auch in der Transmission nutzbar ist, um einen gewünschten visuellen Effekt zu erzielen.

Fig. 4b zeigt das mit der Laminierfolie 40 laminierte Ausweisdokument 42, auf dessen zu sichernder Seite die Strukturschicht 40s aufgebracht ist und von der die Trägerfolie 40t bereits teilweise entfernt ist.

Fig. 4c zeigt nun das mit der Strukturschicht 40s laminierte Ausweisdokument 42. Die mit Sicherheitsmerkmalen versehene Strukturschicht 40s kann ohne Beschädigung bzw. Zerstörung nicht wieder aus dem Ausweisdokument 42 entfernt werden. Die Strukturschicht 40s weist Sicherheitsmerkmale auf, die mit Kopierverfahren nicht nachahmbar sind.

Es kann vorgesehen sein, daß die Trägerfolie 40t nach dem Laminieren als Gegenstück in dem Ausweisdokument 42 verbleibt und ein zusätzliches Sicherheitsmerkmal bildet. Eine mit strukturierter Oberfläche versehene transparente Trägerfolie kann als optischer Verifier verwendet werden, der beim Überdecken der laminierten Seite des Ausweisdokuments 42 einen typischen Moire-Effekt hervorruft.

Es ist auch möglich, die Reliefstruktur der Strukturschicht partiell zu verändern, beispielsweise um eine Personalisierung vorzunehmen. Es kann beispielsweise ein partieller Überdruck mit einem deckenden Lack vorgesehen sein, um so individuelle alphanumerische Zeichen und/oder bildliche Darstellungen aufzubringen.

Weiter kann vorgesehen sein, die Wirkung der Reliefstruktur der Strukturschicht 40s durch einen Überdruck mit einem transparenten oder eingefärbten Lack lokal aufzuheben. Der Brechungsindex des Lackes soll sich dabei vom Brechungsindex der obersten Schicht der Strukturschicht 40s um weniger als 0,1 unterscheiden. Es kann auch vorgesehen sein, die Strukturschicht 40s partiell abzutragen oder einzuebnen, beispielsweise mittels eines Lasers oder eines erhitzten Prägewerkzeugs und auf diese Weise personalisierte Daten auf die Strukturschicht zu übertragen.

Weiter kann vorgesehen sein, daß sich Bereiche der Strukturschicht 40s taktil von ihrer Umgebung abheben oder ein taktil feststellbares Muster aufweisen. Die Bereiche können sich durch Eigenschaften, wie Härte, Elastizität, Schlupfverhalten, Wärmeleitfähigkeit oder Klebrigkeit erfühlen lassen oder taktil feststellbare Erhebungen bzw. Vertiefungen aufweisen, die ein Muster bilden können, wie beispielsweise Zeichen der Blindenschrift oder einfache bildliche Logos, wie beispielsweise Quadrate, Rauten, Kreise oder Sterne. Die Bereiche können auch dadurch taktil feststellbar sein, indem sie in Bezug auf ihre Umgebung vertieft oder erhaben ausgebildet sind. Die taktil feststellbaren Bereiche können weiter im Register zu optisch wirksamen Strukturen darunter liegender Schichten angeordnet sein. Bei den optischen Strukturen kann es sich beispielsweise um ein Beugungsgitter, Hologramm oder Kinegram^{®} handeln.

Es kann vorgesehen sein, daß Bereiche, die personalisierte Daten aufweisen, auch taktil erfaßbar sind, beispielsweise zumindest die wichtigsten Daten auch in Blindenschrift dargestellt sind.

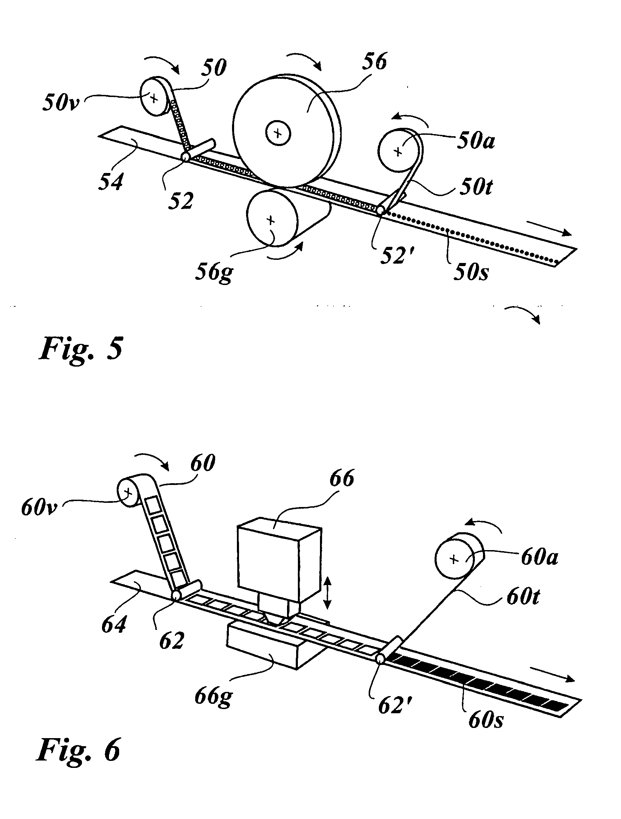

Fig. 5 zeigt nun ein zweites Ausführungsbeispiel zum Applizieren des erfindungsgemäßen Mehrschichtkörpers. Eine Transferfolie 50 mit einer Trägerfolie 50t, einer Strukturschicht 50s und einer nicht dargestellten Heißkleberschicht ist auf einer Vorratsrolle 50v aufgewickelt und wird durch zwei voneinander in Vorschubrichtung beabstandete Andruckrollen 52 und 52' an ein bandförmiges Trägersubstrat 54 angelegt. Eine beheizte Übertragungswalze 56 preßt die Transferfolie 50 auf eine Gegendruckrolle 56, wodurch die Strukturschicht 50s mittels des Heißklebers auf das Trägersubstrat 54 appliziert wird. Die Trägerfolie 50t wird von der Strukturschicht 50s abgezogen und auf eine Rolle 50a aufgewickelt, nachdem die Transferfolie 50 zusammen mit dem Trägersubstrat 54 die stromabwärts hinter der Übertragungswalze 56 angeordnete Andruckrolle 52' passiert hat.

Fig. 6 zeigt ein drittes Ausführungsbeispiel zum Applizieren des erfindungsgemäßen Mehrschichtkörpers. Eine Transferfolie 60 mit einer Trägerfolie 60t, einer Strukturschicht 60s und einer nicht dargestellten Heißkleberschicht ist auf einer Vorratsrolle 60v aufgewickelt und wird durch zwei voneinander in Vorschubrichtung beabstandete Andruckrollen 62 und 62' an ein bandförmiges Trägersubstrat 64 angelegt. Die Strukturschicht 60s ist aus Abschnitten gebildet, die mit Abstand zueinander auf der Trägerfolie 60t fortlaufend angeordnet sind. Ein beheizter Stempel 66 preßt die Transferfolie 60 auf einen Gegenhalter 66, sobald sich ein Abschnitt der Strukturschicht 60s unter dem Stempel 66 befindet, wodurch der Abschnitt der Strukturschicht 60s mittels des Heißklebers auf das Trägersubstrat 64 appliziert wird. Die Trägerfolie 60t wird von der Strukturschicht 60s abgezogen und auf eine Rolle 60a aufgewickelt, nachdem die Transferfolie 60 zusammen mit dem Trägersubstrat 64 die stromabwärts hinter dem Stempel 66 angeordnete Andruckrolle 62' passiert hat.

Es kann auch vorgesehen sein, daß es sich bei dem Trägersubstrat 64 um ein kartenförmiges Trägersubstrat handelt, beispielsweise eine Kreditkarte oder eine Ausweiskarte, das durch eine Transporteinrichtung unter dem Stempel 66 positioniert wird. Bei der Strukturschicht 60s kann es sich in diesem Fall um ein individualisiertes Sicherheitsmerkmal in Form eines Logos mit einem alphanumerischen Eindruck handeln, das mit einer taktil wahrnehmbaren Reliefstruktur an seiner Oberfläche ausgebildet ist.

Der erfindungsgemäße Mehrschichtkörper kann auch nur in einem Zwischenschritt bei der Herstellung eines Produktes eine entscheidende Rolle spielen. Drei Beispiele, bei denen die Reliefstruktur 14o im Endprodukt mit einem Medium überdeckt ist, sollen dies verdeutlichen.

In einem ersten Beispiel wird ein nicht personalisierter Paß mit einem diffraktiven Merkmal versehen, beispielsweise mit einem Patch, welches gemäß Fig. 2f aufgebaut ist. Bei der Personalisierung, die beispielsweise mittels Inkjet vorgenommen wird, dient die mikrostrukturierte Reliefstruktur 14o dazu, ein gutes Druckbild und eine gute Haftung der Druckfarbe zur Strukturschicht 14 zu gewährleisten. Anschließend an die Personalisierung wird die gesamte Datenseite des Passes mit einer von einer Laminierfolie übertragenen Strukturschicht versiegelt, wie oben in Fig. 4a bis 4c dargestellt.

In einem zweiten Beispiel handelt es sich um die Ausbildung der Randregion einer Heißprägefolie. Beim Transfer der Heißprägefolie auf ein Substrat ist die Schärfe der Randregion ein wichtiges Kriterium. Dazu müssen die Schichten der Übertragungslage geeignet aufbrechen. Dieses Aufbrechen kann nun durch eine geeignete Reliefstruktur 14o beeinflußt werden, beispielsweise aufgrund einer mechanischen Schwächung. Einer der Vorteile der Reliefstruktur 14o ist deren Flexibilität und Anpassungsfähigkeit an die Applikationsart und die Stempelform. Wird in einem anschließenden Schritt die Strukturschicht 14 versiegelt, beispielsweise durch ein Laminat mit dem optischen Brechungsindex der Strukturschicht 14, so wird die Reliefstruktur 14o keine erkennbare optische Wirkung entfalten.

in einem dritten Beispiel handelt es sich um die Orientierung von Flüssigkristallen durch geeignete Oberflächenstrukturen. Es kann also vorgesehen sein, daß nach der Applikation eines Mehrschichtkörpers dessen freiliegende Reliefstruktur 14o mit einem anisotropen Polymermaterial voll- oder teilflächig beschichtet wird, beispielsweise mittels eines Druckverfahrens. Anschließend werden die Flüssigkristalle des anisotropen Polymermaterials bei Bedarf unter Zufuhr von Wärme an der als Orientierungsschicht dienenden Reliefstruktur ausgerichtet. Anschließend erfolgt eine UV-Härtung oder eine thermisch indizierte radikalische Vernetzung des anisotropen Polymermaterials zur Fixierung der Orientierung der Flüssigkristalle. Der mit der Flüssigkristallschicht bedruckte Bereich erschließt nun bei Überprüfung mit einem Polarisator eine zusätzliche Information, welche im Register zur Reliefstruktur 14o erkennbar ist.

## Patentansprüche

1. Transferfolie, insbesondere Heißprägefolie, die eine Trägerfolie (22) und eine auf der Trägerfolie (22) angeordnete und von der Trägerfolie (22) ablösbare Übertragungslage mit einer Strukturschicht (14) umfaßt,
**dadurch gekennzeichnet,**
**daß** die Trägerfolie (22) auf ihrer der Strukturschicht (14) zugewandten Seite eine Master-Reliefstruktur (22m) aufweist, daß die Strukturschicht (14) auf ihrer der Trägerfolie (22) zugewandten Seite eine zur Master-Reliefstruktur (22m) der Trägerfolie (22) komplementäre erste Reliefstruktur (14o) aufweist, daß die Strukturschicht (14) auf ihrer der Trägerfolie (22) abgewandten Seite eine sich von der ersten Reliefstruktur (14o) unterscheidende zweite Reliefstruktur (14u) aufweist und daß die zweite Reliefstruktur (14u) mindestens bereichsweise mit einer Reflexionsschicht (16) bedeckt ist.

2. Transferfolie nach Anspruch 1,
**dadurch gekennzeichnet,**
**daß** die Strukturschicht (14) zwischen den mittleren Niveaus der beiden Reliefstrukturen (14o, 14u) eine Dicke < 10 µm aufweist, insbesondere eine Dicke < 5 µm.

3. Transferfolie nach Anspruch 1 oder 2,
**dadurch gekennzeichnet,**
**daß** die Master-Reliefstruktur (22m) durch eine Prägung in der Trägerfolie (22) gebildet ist.

4. Transferfolie nach Anspruch 1 oder 2,
**dadurch gekennzeichnet,**
**daß** die Trägerfolie (22) eine partielle Bedruckung aufweist und die Master-Reliefstruktur mittels der partiellen Bedruckung gebildet ist.

5. Transferfolie nach Anspruch 1 oder 2,
**dadurch gekennzeichnet,**
**daß** die Trägerfolie (22) eine Replizierlack-Schicht aufweist, in die die Master-Reliefstruktur abgeformt ist.

6. Transferfolie nach einem der vorhergehenden Ansprüche,
**dadurch gekennzeichnet,**
**daß** zwischen der Trägerfolie (22) und der Übertragungslage eine Ablöseschicht angeordnet ist.

7. Transferfolie nach einem der vorhergehenden Ansprüche,
**dadurch gekennzeichnet,**
**daß** auf der, der Trägerfolie (22) zugewandten Seite der Strukturschicht (14) eine Schutzschicht angeordnet ist.

8. Transferfolie nach einem der vorhergehenden Ansprüche,
**dadurch gekennzeichnet,**
**daß** die Reflexionsschicht (16) als eine metallische Schicht (16m) ausgebildet ist.

9. Transferfolie nach einem der vorhergehenden Ansprüche,
**dadurch gekennzeichnet,**
**daß** die Reflexionsschicht (16) als eine dielektrische Schicht (16d) ausgebildet ist, wobei die optische Brechzahl der dielektrischen Schicht (16d) sich von der optischen Brechzahl der Strukturschicht (14) unterscheidet.

10. Transferfolie nach einem der vorhergehenden Ansprüche,
**dadurch gekennzeichnet,**
**daß** die erste Reliefstruktur (14o) taktil erkennbar ist.

11. Transferfolie nach einem der vorhergehenden Ansprüche,
**dadurch gekennzeichnet,**
**daß** die erste Reliefstruktur (14o) optisch erkennbar ist.

12. Transferfolie nach Anspruch 11,
**dadurch gekennzeichnet,**
**daß** die erste Reliefstruktur (14o) und/oder die zweite Reliefstruktur (14u) eine Mikrostruktur umfasst.

13. Transferfolie nach Anspruch 11 oder Anspruch 12,
**dadurch gekennzeichnet,**
**daß** die erste Reliefstruktur (14o) und/oder die zweite Reliefstruktur (14u) als Mattstruktur und/oder als diffraktive Struktur und/oder als refraktive Struktur und/oder als Makro-Struktur ausgebildet sind bzw. ist.

14. Transferfolie nach einem der vorhergehenden Ansprüche,
**dadurch gekennzeichnet,**
**daß** die erste Reliefstruktur (14o) und die zweite Reliefstruktur (14u) voneinander unabhängige optische Effekte ausbilden.

15. Transferfolie nach einem der Ansprüche 1 bis 13,
**dadurch gekennzeichnet,**
**daß** die erste Reliefstruktur (14o) und die zweite Reliefstruktur (14u) voneinander abhängige optische Effekte ausbilden.

16. Transferfolie nach einem der vorhergehenden Ansprüche,
**dadurch gekennzeichnet,**
**daß** die erste Reliefstruktur (14o) partiell eine Reflexionsschicht aufweist.

17. Verfahren zur Herstellung einer Transferfolie, die eine Trägerfolie (22) und eine auf der Trägerfolie (22) angeordnete und von der Trägerfolie (22) ablösbare Übertragungslage mit einer Strukturschicht (14) umfaßt,
**dadurch gekennzeichnet,**
**daß** in die Trägerfolie (22) eine Master-Reliefstruktur (22m) eingebracht wird und/oder daß auf die Trägerfolie (22) die Master-Reliefstruktur (22m) aufgebracht wird, daß auf die Trägerfolie (22) die Strukturschicht (14) aufgebracht wird, wobei in die Strukturschicht (14) eine zur Master-Reliefstruktur (22m) der Trägerfolie (22) komplementäre erste Reliefstruktur (14o) abgeformt wird, daß die erste Reliefstruktur (14o) gegebenenfalls durch Aushärten der Strukturschicht (14) fixiert wird, daß in die Strukturschicht (14) eine von der ersten Reliefstruktur (14o) verschiedene zweite Reliefstruktur (14u) abgeformt wird, und daß auf die zweite Reliefstruktur (14u) mindestens bereichsweise eine Reflexionsschicht (16) aufgebracht wird.

18. Verfahren nach Anspruch 17,
**dadurch gekennzeichnet,**
**daß** die Master-Reliefstruktur (22m) durch Prägen in die Trägerfolie (22) eingebracht wird.

19. Verfahren nach Anspruch 17,
**dadurch gekennzeichnet,**
**daß** die Master-Reliefstruktur (22m) durch partielles Bedrucken der Trägerfolie (22) aufgebracht wird.

20. Verfahren nach einem der Ansprüche 17 bis 19,
**dadurch gekennzeichnet,**
**daß** auf die Trägerfolie (22) eine Ablöseschicht und/oder eine Schutzschicht vor dem Aufbringen der Strukturschicht (14) aufgebracht werden bzw. wird.

21. Verfahren nach einem der Ansprüche 17 bis 20,
**dadurch gekennzeichnet,**
**daß** die Strukturschicht (14) aus einer ersten und einer zweiten Schicht gebildet wird, wobei auf die mit der ersten Reliefstruktur (14o) versehene ausgehärtete erste Schicht die zweite Schicht aufgebracht wird und die zweite Reliefstruktur (14u) in die zweite Schicht abgeformt wird.

22. Verfahren nach einem der Ansprüche 17 bis 21,
**dadurch gekennzeichnet,**
**daß** eine Kleberschicht (18) aufgetragen wird, welche die Reflexionsschicht (16) und die zweite Reliefstruktur (14u) abdeckt.

23. Mehrschichtkörper mit einer Strukturschicht (14), hergestellt durch Abziehen der Trägerfolie von der Übertragungslage der Transferfolie nach Anspruch 1, wobei die Strukturschicht die Vorderseite des Mehrschichtkörpers bildet und in eine die Vorderseite des Mehrschichtkörpers bildende erste Oberfläche der Strukturschicht eine erste Reliefstruktur (14o) abgeformt ist,
**dadurch gekennzeichnet,**
**daß** in eine der ersten Oberfläche der Strukturschicht gegenüberliegende zweite Oberfläche eine zweite Reliefstruktur (14u) abgeformt ist, daß die zweite Reliefstruktur (14u) verschieden von der ersten Reliefstruktur (14o) ist, daß die zweite Reliefstruktur (14u) mindestens bereichsweise von einer Reflexionsschicht (18) bedeckt ist, und daß die Strukturschicht (14) zwischen den mittleren Niveaus der beiden Reliefstrukturen (14o, 14u) eine Dicke < 10 µm aufweist, vorzugsweise eine Dicke < 5 µm aufweist.

24. Mehrschichtkörper nach Anspruch 23,
**dadurch gekennzeichnet,**
**daß** die erste Reliefstruktur (14o) partiell abgetragen oder eingeebnet ist.

25. Mehrschichtkörper nach Anspruch 23 oder 24,
**dadurch gekennzeichnet,**
**daß** die erste Reliefstruktur (14o) partiell überdruckt ist.

26. Mehrschichtkörper nach einem der Ansprüche 23 bis 25,
**dadurch gekennzeichnet,**
**daß** die erste Reliefstruktur einen taktil erfaßbaren Bereich aufweist.

27. Mehrschichtkörper nach Anspruch 26,
**dadurch gekennzeichnet,**
**daß** der taktil erfaßbare Bereich im Register zu einer darunter angeordneten Struktur angeordnet ist, beispielsweise einer optisch wirksamen diffraktiven Struktur.

28. Sicherheitsdokument mit einem Mehrschichtkörper nach einem der Ansprüche 23 bis 27.

## Claims

1. Transfer film, in particular a hot embossing film, which comprises a carrier film (22) and a transfer layer having a structured layer (14), said transfer layer being arranged on the carrier film (22) and being able to be released from the carrier film (22),
**characterised in that**,
the carrier film (22) has a master relief structure (22m) on its side facing the structured layer (14), the structured layer (14) has a first relief structure (14o) that is complementary to the master relief structure (22m) of the carrier film (22) on its side facing the carrier film (22), the structured layer (14) has a second relief structure (14u) that differs from the first relief structure (14o) on its side facing away from the carrier film (22) and the second relief structure (14u) is covered at least in certain regions by a reflective layer (16).

2. Transfer film according to claim 1,
**characterised in that**,
the structured layer (14) between the median levels of both relief structures (14o, 14u) has a thickness of < 10µm, in particular a thickness of < 5µm.

3. Transfer film according to claim 1 or 2,
**characterised in that**,
the master relief structure (22m) is formed by an impression in the carrier film (22).

4. Transfer film according to claim 1 or 2,
**characterised in that**,
the carrier film (22) has a partial printing and the master relief structure is formed by means of the partial printing.

5. Transfer film according to claim 1 or 2,
**characterised in that**,
the carrier film (22) has a replicating lacquer layer, into which the master relief structure is moulded.

6. Transfer film according to one of the preceding claims,
**characterised in that**,
a release layer is arranged between the carrier film (22) and the transfer layer.

7. Transfer film according to one of the preceding claims,
**characterised in that**,
a protective layer is arranged on the side of the structured layer (14) facing the carrier film (22).

8. Transfer film according to one of the preceding claims,
**characterised in that**,
the reflective layer (16) is designed as a metallic layer (16m).

9. Transfer film according to one of the preceding claims,
**characterised in that**,
the reflective layer (16) is designed as a dielectric layer (16d), wherein the optical refractive index of the dielectric layer (16d) differs from the optical refractive index of the structured layer (14).

10. Transfer film according to one of the preceding claims,
**characterised in that**,
the first relief structure (14o) can be detected tactilely.

11. Transfer film according to one of the preceding claims,
**characterised in that**,
the first relief structure (14o) can be detected optically.

12. Transfer film according to claim 11,
**characterised in that**,
the first relief structure (14o) and/or the second relief structure (14u) comprises a microstructure.

13. Transfer film according to claim 11 or claim 12,
**characterised in that**,
the first relief structure (14o) and/or the second relief structure (14u) is/are formed as a matt structure and/or as a diffractive structure and/or as a refractive structure and/or as a macro structure.

14. Transfer film according to one of the preceding claims,
**characterised in that**,
the first relief structure (14o) and the second relief structure (14u) form optical effects that are independent of each other.

15. Transfer film according to one of claims 1 to 13,
**characterised in that**,
the first relief structure (14o) and the second relief structure (14u) form optical effects that are dependent on each other.

16. Transfer film according to one of the preceding claims,
**characterised in that**,
the first relief structure (14o) partially has a reflective layer.

17. Method for the production of a transfer film, which comprises a carrier film (22) and a transfer layer having a structured layer (14), said transfer layer being arranged on the carrier film (22) and being able to be released from the carrier film (22),
**characterised in that**,
a master relief structure (22m) is introduced into the carrier film (22) and/or the master relief structure (22m) is applied to the carrier film (22), the structured layer (14) is applied to the carrier film (22), wherein a first relief structure (14o) that is complementary to the master relief structure (22m) of the carrier film (22) is moulded into the structured layer (14), the first relief structure (14o) is potentially fixed by curing the structured layer (14), a second relief structure (14u) that differs from the first relief structure (14o) is moulded into the structured layer (14), and a reflective layer (16) is applied, at least in certain regions, to the second relief structure (14u).

18. Method according to claim 17,
**characterised in that**,
the master relief structure (22m) is introduced into the carrier film (22) by stamping.

19. Method according to claim 17,
**characterised in that**,
the master relief structure (22m) is applied by partial printing of the carrier film (22).

20. Method according to one of claims 17 to 19,
**characterised in that**,
a release layer and/or a protective layer against the application of the structured layer (14) is/are applied to the carrier film (22).

21. Method according to one of claims 17 to 20,
**characterised in that**,
the structured layer (14) is formed from a first and a second layer, wherein the second layer is applied to the cured first layer that has had the first relief structure (14o) added to it, and the second relief structure (14u) is moulded into the second layer.

22. Method according to one of claims 17 to 21,
**characterised in that**,
an adhesive layer (18) is applied, which covers the reflective layer (16) and the second relief structure (14u).

23. Multilayer body having a structured layer (14), produced by removing the carrier film from the transfer layer of the transfer film according to claim 1, wherein the structured layer forms the front side of the multilayer body and a first relief structure (14o) is moulded into a first surface of the structured layer that forms the front side of the multilayer body,
**characterised in that**,
a second relief structure (14u) is moulded into a second surface lying opposite the first surface of the structured layer, the second relief structure (14u) is different from the first relief structure (14o), the second relief structure (14u) is covered at least in certain regions by a reflective layer (18), and the structured layer (14) between the median levels of both relief structures (14o, 14u) has a thickness of < 10µm, preferably a thickness of < 5µm.

24. Multilayer body according to claim 23,
**characterised in that**,
the first relief structure (14o) is partially ablated or levelled off.

25. Multilayer body according to claim 23 or 24,
**characterised in that**,
the first relief structure (14o) is partially overprinted.

26. Multilayer body according to one of claims 23 to 25,
**characterised in that**,
the first relief structure has a region that can be detected tactilely.

27. Multilayer body according to claim 26,
**characterised in that**,
the tactilely detectable region is arranged in register with a structure arranged beneath it, for example an optically active, diffractive structure.

28. Security document having a multilayer body according to one of claims 23 to 27.

## Revendications

1. Film de transfert, en particulier film estampé à chaud qui comporte un film porteur (22) et une couche de transmission disposée sur le film porteur (22) et détachable du film porteur (22) avec une couche structurelle (14),
**caractérisé en ce que**
le film porteur (22) présente, sur son côté tourné vers la couche structurelle (14), une structure en relief maîtresse (22m), **en ce que** la couche structurelle (14) présente, sur son côté tourné vers le film porteur (22), une première structure en relief (14o) complémentaire à la structure en relief maîtresse (22m) du film porteur (22), **en ce que** la couche structurelle (14) présente, sur son côté éloigné du film porteur (22), une seconde structure en relief (14u) se différenciant de la première structure en relief (14o) et **en ce que** la seconde structure en relief (14u) est recouverte au moins par endroits d'une couche de réflexion (16).

2. Film de transfert selon la revendication 1,
**caractérisé en ce que**
la couche structurelle (14) présente, entre les niveaux médians des deux structures en relief (14o, 14u), une épaisseur < 10 µm, en particulier une épaisseur < 5 µm.

3. Film de transfert selon la revendication 1 ou 2,
**caractérisé en ce que**
la structure en relief maîtresse (22m) est formée par un estampage dans le film porteur (22).

4. Film de transfert selon la revendication 1 ou 2,
**caractérisé en ce que**
le film porteur (22) présente une impression partielle et la structure en relief maîtresse est formée à l'aide de l'impression partielle.

5. Film de transfert selon la revendication 1 ou 2,
**caractérisé en ce que**
le film porteur (22) présente une couche de laque de réplique, dans laquelle la structure en relief maîtresse est moulée.

6. Film de transfert selon l'une quelconque des revendications précédentes,
**caractérisé en ce que**
une couche de détachement est disposée entre le film porteur (22) et la couche de transmission.

7. Film de transfert selon l'une quelconque des revendications précédentes,
**caractérisé en ce que**
une couche de protection est disposée sur le côté tourné vers le film porteur (22) de la couche structurelle (14).

8. Film de transfert selon l'une quelconque des revendications précédentes,
**caractérisé en ce que**
la couche de réflexion (16) est réalisée comme une couche métallique (16m).

9. Film de transfert selon l'une quelconque des revendications précédentes,
**caractérisé en ce que**
la couche de réflexion (16) est réalisée comme une couche diélectrique (16d), l'indice de réfraction optique de la couche diélectrique (16d) se différenciant de l'indice de réfraction optique de la couche structurelle (14).

10. Film de transfert selon l'une quelconque des revendications précédentes,
**caractérisé en ce que**
la première structure en relief (14o) est détectable de manière tactile.

11. Film de transfert selon 1"une quelconque des revendications précédentes,
**caractérisé en ce que**
la première structure en relief (14o) est détectable optiquement.

12. Film de transfert selon la revendication 11,
**caractérisé en ce que**
la première structure en relief (14o) et/ou la seconde structure en relief (14u) comporte une microstructure.

13. Film de transfert selon la revendication 11 ou 12,
**caractérisé en ce que**
la première structure en relief (14o) et/ou la seconde structure en relief (14u) est réalisée comme structure mate et/ou comme structure diffractive et/ou comme structure réfractive et/ou comme macrostructure.

14. Film de transfert selon l'une quelconque des revendications précédentes,
**caractérisé en ce que**
la première structure en relief (14o) et la seconde structure en relief (14u) réalisent des effets optiques indépendants les uns des autres.

15. Film de transfert selon l'une quelconque des revendications 1 à 13,
**caractérisé en ce que**
la première structure en relief (14o) et la seconde structure en relief (14u) réalisent des effets optiques dépendants les uns des autres.

16. Film de transfert selon l'une quelconque des revendications précédentes,
**caractérisé en ce que**
la première structure en relief (14o) présente en partie une couche de réflexion.

17. Procédé de fabrication d'un film de transfert qui comporte un film porteur (22) et une couche de transmission disposée sur le film porteur (22) et détachable du film porteur (22) avec une couche structurelle (14),
**caractérisé en ce que**
une structure en relief maîtresse (22m) est introduite dans le film porteur (22) et/ou **en ce que** la structure en relief maîtresse (22m) est appliquée sur le film porteur (22), **en ce que** la couche structurelle (14) est appliquée sur le film porteur (22), une première structure en relief (14o) complémentaire à la structure en relief maîtresse (22m) du film porteur (22) étant moulée dans la couche structurelle (14), **en ce que** la première structure en relief (14o) est éventuellement fixée par durcissement de la couche structurelle (14), **en ce qu'**une seconde structure en relief (14u) différente de la première structure en relief (14o) est moulée dans la couche structurelle (14) et **en ce qu'**une couche de réflexion (16) est appliquée au moins par endroits sur la seconde structure en relief (14u).

18. Procédé selon la revendication 17,
**caractérisé en ce que**
la structure en relief maîtresse (22m) est introduite par estampage dans le film porteur (22).

19. Procédé selon la revendication 17,
**caractérisé en ce que**
la structure en relief maîtresse (22m) est appliquée par impression partielle du film porteur (22).

20. Procédé selon l'une quelconque des revendications 17 à 19,
**caractérisé en ce que**
une couche de détachement et/ou une couche de protection est ou sont appliquées sur le film porteur (22) avant l'application de la couche structurelle (14).

21. Procédé selon l'une quelconque des revendications 17 à 20,
**caractérisé en ce que**
la couche structurelle (14) est constituée d'une première et d'une seconde couche, la seconde couche étant appliquée sur la première couche durcie pourvue de la première structure en relief (14o) et la seconde structure en relief (14u) étant moulée dans la seconde couche.

22. Procédé selon l'une quelconque des revendications 17 à 21,
**caractérisé en ce que**
une couche de colle (18) est appliquée, laquelle recouvre la couche de réflexion (16) et la seconde structure en relief (14u).

23. Corps multicouche avec une couche structurelle (14), fabriqué par retrait du film porteur de la couche de transmission du film de transfert selon la revendication 1, la couche structurelle formant le côté avant du corps multicouche et une première structure en relief (14o) étant formée dans une première surface formant le côté avant du corps multicouche de la couche structurelle,
**caractérisé en ce que**
une seconde structure en relief (14u) est moulée dans une seconde surface opposée à la première surface de la couche structurelle, **en ce que** la seconde structure en relief (14u) est différente de la première structure en relief (14o), **en ce que** la seconde structure en relief (14u) est recouverte au moins par endroits par une couche de réflexion (18), et **en ce que** la couche structurelle (14) présente entre les niveaux médians des deux structures en relief (14o, 14u) une épaisseur < 10 µm, de préférence une épaisseur < 5 µm.

24. Corps multicouche selon la revendication 23,
**caractérisé en ce que**
la première structure en relief (14o) est partiellement enlevée ou aplanie.

25. Corps multicouche selon la revendication 23 ou 24,
**caractérisé en ce que**
la première structure en relief (14o) est partiellement surimprimée.

26. Corps multicouche selon l'une quelconque des revendications 23 à 25,
**caractérisé en ce que**
la première structure en relief présente une zone détectable de manière tactile.

27. Corps multicouche selon la revendication 26,
**caractérisé en ce que**
la zone détectable de manière tactile est disposée en registre par rapport à une structure disposée dessous, par exemple une structure diffractive active optiquement.

28. Document de sécurité avec un corps multicouche selon l'une quelconque des revendications 23 à 27.
